# EUROPÄISCHE PATENTANMELDUNG

(11) **EP 0 903 276 A2**
(43) Veröffentlichungstag der Anmeldung: **24.03.1999**
(21) Anmeldenummer: 98117390.9
(22) Anmeldetag: 14.09.1998
(51) Int. Cl.: B62B 3/06

(54) **Schlepper für ein verfahrbares Ladegestell**

(30) Priorität: 22.09.1997 DE 19741765
(71) Anmelder: ICE Cargo Equipment AG, 6330 Cham (CH)
(72) Erfinder: Fischer, Horst, 46147 Oberhausen (DE)
(74) Vertreter: Preissner, Nicolaus, Dipl.-Ing.

(57) **Zusammenfassung**

Die Erfindung betrifft einen Schlepper (1) für ein verfahrbares Ladegestell (50), wobei der Schlepper (1) mindestens ein lenkbares Antriebsrad (3), weitere Lastrollen (18, 19) und ein Kupplungsmittel aufweist, das mit dem Ladegestell (50) verbindbar ist. Um die Manövrierfähigkeit auf engstem Raum zu erhöhen wird vorgeschlagen, daß das Kupplungsmittel ein Lastaufnahmeteil (7) aufweist, das schwenkbeweglich an dem Schlepper gelagert ist und das Ladegestell im Lastzustand abstützt, und daß an dem Lastaufnahmeteil (7) mindestens eine Bockrolle (6) angeordnet ist, die zusammen mit dem Lastaufnahmeteil verschwenkbar ist.

## Beschreibung

Die Erfindung betrifft einen Schlepper für ein verfahrbares Ladegestell, wobei der Schlepper mindestens ein lenkbares Antriebsrad, weitere Lastrollen und ein Kupplungsmittel aufweist, das mit dem Ladegestell verbindbar ist. Weiterhin betrifft die Erfindung ein Ladegestell für einen derartigen Schlepper.

Schlepper der eingangs genannten Art sind in vielfältigen Ausführungen bekannt. Beispielsweise können derartige Schlepper deichselgeführt, als Sitzschlepper oder als Stand-Mitfahrgerät ausgeführt sein. Über ein meist als Deichsel ausgeführtes Kupplungsmittel können die bekannten Schlepper mit dem verfahrbaren Ladegestell verbunden werden. Der aus Schlepper und Ladegestell gebildete Zug hat jedoch einen relativ großen Wendekreis. Bei beengten räumlichen Verhältnissen, wie sie beispielsweise an Flughäfen auf Grund der hohen Mieten für Lagerflächen vorliegen, ist ein großer Wendekreis nachteilig, da hierdurch die Manövrierfähigkeit reduziert ist.

Ausgehend hiervon liegt der vorliegenden Erfindung die Aufgabe zugrunde, einen Schlepper vorzuschlagen, der mit dem zu schleppenden Ladegestell eine gute Manövrierfähigkeit aufweist.

Zur Lösung dieser Aufgabe wird bei einem Schlepper der eingangs genannten Art vorgeschlagen, daß das Kupplungsmittel ein Lastaufnahmeteil aufweist, das schwenkbeweglich an dem Schlepper gelagert ist und das Ladegestell im Lastzustand abstützt, und daß an dem Lastaufnahmeteil mindestens eine Bockrolle angeordnet ist, die zusammen mit dem Lastaufnahmeteil verschwenkbar ist.

Der erfindungsgemäße Schlepper zeichnet sich durch äußerst kleine Abmessungen aus und ist mit dem verfahrbaren Ladegestell auf der Stelle drehbar, so daß eine sehr gute Manövrierfähigkeit vorliegt. Hierdurch ist gewährleistet, daß auch große sperrige Güter auf sehr kleinen Räumen, wie sie beispielsweise im Luftfrachtbereich vorliegen, manövriert werden können.

Im Leerzustand stützt sich der Schlepper bodenseitig auf dem mindestens einen Antriebsrad sowie auf der mindestens einen Bockrolle ab, die am Lastaufnahmeteil angeordnet ist. In diesem Zustand befindet sich das Lastaufnahmeteil in seiner unteren Schwenkstellung. Im Lastzustand ist das schwenkbewegliche Lastaufnahmeteil derart nach oben geschwenkt, daß das Lastaufnahmeteil das verfahrbare Ladegestell abstützt. In diesem Zustand hat die mindestens eine Bockrolle des Schleppers keinen Bodenkontakt. Die bodenseitige Abstützung des Schleppers erfolgt über das mindestens eine Antriebsrad sowie über nachlaufende Lastrollen. Im Lastzustand bildet somit der Schlepper mit dem verfahrbaren Ladegestell eine Einheit, die auf engstem Raum manövrierfähig ist.

Vorteilhafte Ausgestaltungen der Erfindung ergeben sich aus den Unteransprüchen.

Vorteilhaft ist das Lastaufnahmeteil schwenkbeweglich an einer Achse gelagert, wobei an einem ersten Ende eine Hubeinrichtung vorgesehen ist und an einem anderen Ende ein Mitnehmer für das Ladegestell. Mit der Hubeinrichtung kann das Lastaufnahmeteil zusammen mit der hieran angeordneten mindestens einen Bockrolle verschwenkt werden. In der oberen Schwenkstellung wirkt der am Lastaufnahmeteil vorgesehene Mitnehmer mit dem verfahrbaren Ladegestell zusammen.

In weiterer Ausgestaltung weist der Schlepper einen Basisrahmen auf, an dem das mindestens eine Antriebsrad, das schwenkbare Lastaufnahmeteil und die Lastrollen angeordnet sind.

Vorteilhaft ist ein Antriebsteil vorgesehen, in dem das mindestens eine Antriebsrad angeordnet ist, und ein vom Antriebsteil abragender Ausleger, an dem die Lastrollen vorgesehen sind. Hierbei weist der Ausleger eine wesentlich geringere Höhe als das Antriebsteil auf. Das Antriebsteil kann in verschiedenen Ausführungsformen vorliegen. So kann eine Deichselführung oder eine Sitzausführung vorgesehen sein.

Um einen Durchtritt des schwenkbaren Lastaufnahmeteils zu ermöglichen, ist in dem Ausleger eine entsprechende Durchtrittsöffnung vorgesehen.

Bei einer vorteilhaften Ausgestaltung ist das Antriebsteil mit einer Handdeichsel versehen, die mit dem Antriebsrad gekoppelt ist.

Ein weiterer Aspekt der vorliegenden Erfindung betrifft ein Ladegestell für einen derartigen Schlepper, wobei das Ladegestell als Palette aufgebildet ist, die auf mindestens einer Seite durch Bockrollen abgestützt ist. Eine derartige Palette eignet sich insbesondere für den Luftfrachtbereich. Hier sind die zu transportierenden Einheiten sehr groß und weisen darüber hinaus auch ein hohes Gewicht auf.

Vorteilhaft ist das Ladegstell auf einer Seite durch Bockrollen und auf der gegenüberliegenden Seite durch Böcke abgestützt.

Zweckmäßig weist das Ladegestell eine Öffnung zum Einfahren eines Auslegers des Schleppers auf. Hierdurch verringern sich die äußeren Abmessungen der aus Schlepper und Ladegestell bestehenden Einheit.

Die Anzahl der Antriebsräder, der Bockrollen und der Lastrollen kann variieren und den jeweiligen Verhältnissen angepaßt sein. Allen vorgenannten Ausführungsformen ist jedoch gemeinsam, daß sowohl im Leerzustand als auch im Lastzustand auch bei beengten räumlichen Verhältnissen eine hohe Manövrierfähigkeit vorliegt.

Nachfolgend wird die Erfindung anhand eines Ausführungsbeispiels näher erläutert, das in schematischer Weise in der Zeichnung dargestellt ist. Dabei zeigen:
- Figur 1: eine Seitenansicht eines erfindungsgemäßen Schleppers im Leerzustand sowie des zu schleppenden Ladegestells,
- Figur 2: eine Seitenansicht des Schleppers gemäß Figur 1 im Lastzustand, und
- Figur 3: eine vergrößerte Darstellung der Einzelheit III in Figur 1.

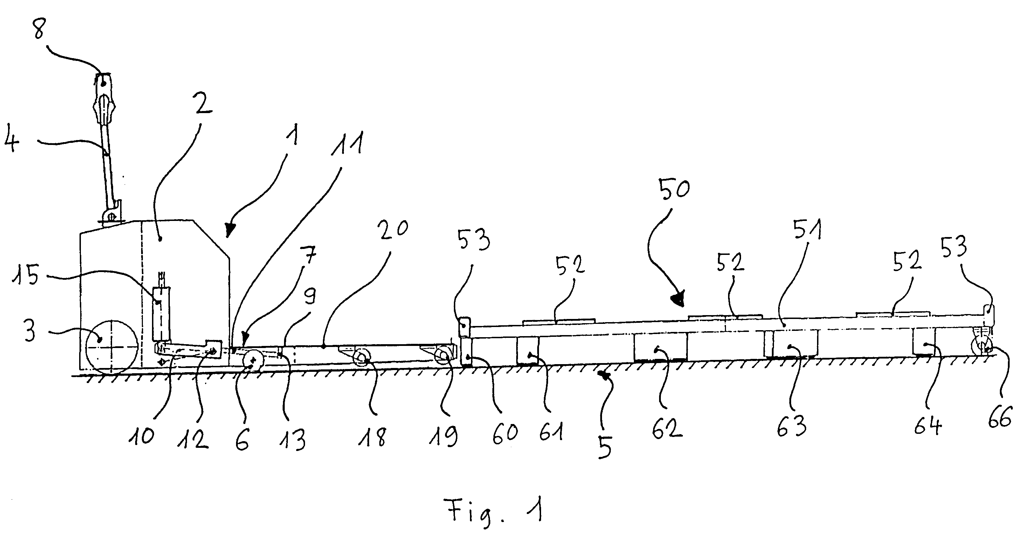

Figur 1 zeigt in Seitenansicht den Schlepper 1, der ein Antriebsteil 2 aufweist, in dem ein Antriebsrad 3 vorgesehen ist. Aus Gründen der Übersichtlichkeit sind bekannte Elemente, wie Antriebsmotor, Batterie, Bremse etc., die in dem Antriebsteil 2 untergebracht sind, nicht dargestellt.

Von dem Antriebsteil 2 ragt ein Ausleger 20 ab, der eine wesentlich geringere Höhe als das Antriebsteil 2 aufweist. An dem Ausleger 20 sind bodenseitig Lastrollen 18, 19 vorgesehen, die jeweils schwenkbeweglich gelagert sind.

Der Ausleger 20 kann Teil eines nicht näher dargestellten Basisrahmens sein, an dem sowohl das Antriebsrad 3 als auch die Lastrollen 18, 19 gelagert sind.

Wie aus Figur 1 weiterhin hervorgeht weist der Schlepper 1 eine Handdeichsel 4 auf, deren Kopf 8 mit Bedienelementen versehen ist. Die Handdeichsel 4 ist zur Lenkung des Schleppers 1 mit dem Antriebsrad 3 gekoppelt.

An dem Antriebsrad 3 ist ein rahmenförmiges Lastaufnahmeteil 7 an einer horizontal ausgerichteten Achse 12 schwenkbar gelagert. Hierbei weist das Lastaufnahmeteil 7 einerseits einen Hebel 10 auf, an dem eine Hubeinrichtung 15 angelenkt ist. Die Hubeinrichtung 15 ist auf ihrer anderen Seiten am Antriebsteil 2 festgelegt. Ein gegenüberliegender Hebel 11 des Lastaufnahmeteils 7 weist endseitig einen Mitnehmer 13 auf, der hakenförmig ausgebildet ist.

An dem schwenkbeweglich gelagerten Lastaufnahmeteil 7 ist weiterhin etwa in der Mitte des Hebels 11 eine Bockrolle 6 gelagert. Bei der dargestellten Ausführungsform ist die Bockrolle 6 auf beiden Seiten des Lastaufnahmeteils 7 vorgesehen.

Das verfahrbare Ladegestell 50 ist als Luftfracht-Palette mit einer rechteckigen Plattform 51 ausgebildet. Auf der Oberseite der Plattform 51 sind mehrere beabstandete Transportrollen 52 vorgesehen. Die Plattform 51 ist an beiden Längsseiten durch eine die Oberseite der Plattform 51 überragende Umrandung 53 begrenzt.

An der Unterseite des Ladegestells sind beabstandete Böcke 60, 61, 62, 63, 64 vorgesehen, welche die Plattform an dem Boden 5 abstützen. Randseitig sind an der Plattform 51 mehrere Bockrollen 66 drehbar angebracht. An der den Bockrollen 66 gegenüberliegenden Seite ist eine Öffnung vorgesehen, in die der Ausleger 20 des Schleppers 1 einfahrbar ist.

Figur 1 zeigt den Leerzustand des Schleppers 1 der Aufnahme des Ladegestells 50. In diesem Leerzustand stützt sich der Schlepper 1 mittels des Antriebsrads 3 und der nach unten geschwenkten Bockrolle 6 am Boden 5 ab. Die Lastrollen 18, 19 sind mit geringem Abstand zum Boden 5 angeordnet und haben somit im Leerzustand keinen Bodenkontakt. Das Ladegestell 50 stützt sich auf den Böcken 60, 61, 62, 63, 64 sowie auf deren Bockrollen 66 am Boden 5 ab.

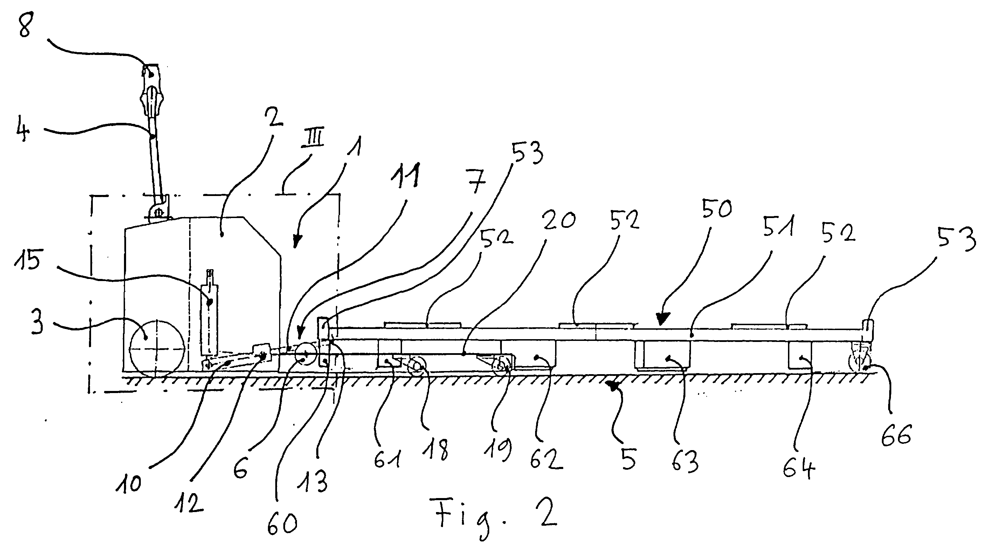

Figur 2 zeigt den Schlepper 1 und das Ladegestell 50 im Lastzustand. Im Lastzustand ist der Schlepper 1 mit dem Ausleger 20 unterhalb des Ladegestells 50 gefahren. Hierbei erfolgt das Einfahren in das Ladegestell 50 mit heruntergeschwenkter Bockrolle 6, so daß die Lastrollen 18, 19 keinen Bodenkontakt haben. Durch Betätigung der Hubeinrichtung 15 wird das Lastaufnahmeteil 7 in die in Figur 2 dargestellte Lastposition verstellt. Durch die Schwenkbewegung in Uhrzeigergegenrichtung hebt die Bockrolle 6 vom Boden 5 ab, wodurch die Lastrollen 18, 19, die unterhalb des Auslegers 20 angebracht sind, in Kontakt mit dem Boden 5 geraten. Durch die Schwenkbewegung des Lastaufnahmeteils 7 wird der Mitnehmer 13 hinter die Umrandung 53 geschwenkt. In dem dargestellten Lastzustand liegt dann das Ladegestell 50 auf dem Lastaufnahmeteil 7 auf und stützt sich lediglich über die Bockrollen 66 noch am Boden ab. Somit haben die Böcke 60, 61, 62, 63, 64 im Lastzustand keinen Bodenkontakt mehr.

Im dargestellten Lastzustand sind somit der Schlepper 1 und das verfahrbare Ladegestell 50 starr miteinander verbunden, so daß sie eine Einheit bilden. Die dargestellte Einheit ist durch das Antriebsrad 3, die Lastrollen 18, 19 sowie die Bockrollen 66 des Lastgestells auf dem Boden 5 abgestützt. Die Lastrollen 18, 19 laufen in Folge ihrer Schwenkbarkeit dem Antriebsrad 3 nach.

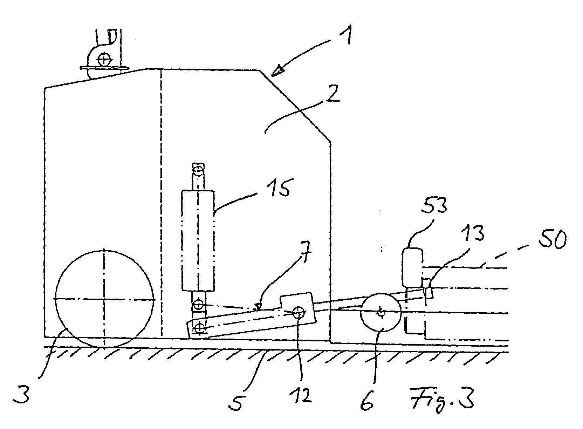

Figur 3 zeigt eine Vergrößerung der Einzelheit III in Figur 2. Aus dieser Darstellung ist besonders gut ersichtlich, daß das schwenkbeweglich angeordnete Lastaufnahmeteil 7 mit seinem endseitigen Mitnehmer 13 die Umrandung 53 des Schleppers 50 hintergreift. Somit ist der Schlepper 1 und das verfahrbare Ladegestell im Lastzustand miteinander gekoppelt.

Die aus dem Schlepper 1 und dem verfahrbaren Ladegestell 50 gebildete Einheit kann mittels der Handdeichsel 4 auf der Stelle gedreht werden, wenn man das Antriebsrad 3 um 90° einschlägt.

Insgesamt zeichnet sich die aus dem Schlepper 1 und dem Ladegestell 50 gebildete Einheit durch eine sehr hohe Wendigkeit auf, so daß auch bei engsten Platzverhältnissen eine gute Manövrierfähigkeit erhalten wird.

## Patentansprüche

1. Schlepper für ein verfahrbares Ladegestell, wobei der Schlepper mindestens ein lenkbares Antriebsrad, weitere Lastrollen und ein Kupplungsmittel aufweist, das mit dem Ladegestell verbindbar ist, dadurch gekennzeichnet, daß das Kupplungsmittel ein Lastaufnahmeteil (7) aufweist, das schwenkbeweglich an dem Schlepper (1) gelagert ist und das Ladegestell im Lastzustand abstützt und daß an dem Lastaufnahmeteil (7) mindestens eine Bockrolle (6) angeordnet ist, die zusammen mit dem Lastaufnahmeteil (7) schwenkbar ist.

2. Schlepper nach Anspruch 1, dadurch gekennzeichnet, daß das Lastaufnahmeteil (7) schwenkbeweglich an einer Achse (12) gelagert ist, wobei an einem ersten Ende eine Hubeinrichtung (15) vorgesehen ist und an dem anderen Ende ein Mitnehmer (13) für das Ladegestell (50).

3. Schlepper nach Anspruch 1 oder 2, dadurch gekennzeichnet, daß der Schlepper (1) einen Basisrahmen aufweist, an dem das mindestens eine Antriebsrad (3), das schwenkbare Lastaufnahmeteil (7) und die Lastrollen (18, 19) angeordnet sind.

4. Schlepper nach einem der Ansprüche 1 bis 3, dadurch gekennzeichnet, daß ein Antriebsteil (2) vorgesehen ist, in dem das mindestens eine Antriebsrad (3) angeordnet ist, und ein vom Antriebsteil (2) abragender Ausleger (20), an dem die Lastrollen (18, 19) vorgesehen sind.

5. Schlepper nach Anspruch 4, dadurch gekennzeichnet, daß der Ausleger (20) eine Durchtrittsöffnung (9) für das schwenkbewegliche Lastaufnahmeteil (7) aufweist.

6. Schlepper nach einem der Ansprüche 1 bis 5, dadurch gekennzeichnet, daß das Antriebsteil (2) mit einer Handdeichsel (4) versehen ist, die mit dem Antriebsrad (3) gekoppelt ist.

7. Ladegestell für einen Schlepper nach einem der Ansprüche 1 bis 6, dadurch gekennzeichnet, daß das Ladegestell (50) als Palette ausgebildet ist, die auf mindestens einer Seite durch Bockrollen (66) abgestützt ist.

8. Ladegestell nach Anspruch 7, dadurch gekennzeichnet, daß das Ladegestell (50) auf einer Seite durch Bockrollen (66) und auf der gegenüberliegenden Seite durch Böcke (60, 61, 62, 63, 64) abgestützt ist.

9. Ladegestell nach Anspruch 7 oder 8, dadurch gekennzeichnet, daß das Ladegestell (50) eine Öffnung zum Einfahren eines Auslegers (20) des Schleppers (1) aufweist.
